Europäisches Patentamt

European Patent Office

Office européen des brevets

(11) Publication number: **0 243 009 B1**

# EUROPEAN PATENT SPECIFICATION

(45) Date of publication of patent specification: **18.09.91**  (51) Int. Cl.⁵: **G10L 5/06**

(21) Application number: **87302603.3**

(22) Date of filing: **25.03.87**

(54) Speech recognition system using Markov models.

(30) Priority: **25.03.86 JP 65030/86**

(43) Date of publication of application:
**28.10.87 Bulletin 87/44**

(45) Publication of the grant of the patent:
**18.09.91 Bulletin 91/38**

(84) Designated Contracting States:
**DE FR GB IT**

(56) References cited:

**IEEE TRANSACTIONS ON INFORMATION
THEORY, vol. IT-21, no. 3, May 1975, pages
250-256, New York, US; F. JELINEK et al.:
"Design of a linguistic statistical decoder
for the recognition of continuous speech"**

**IBM TECHNICAL DISCLOSURE BULLETIN, vol.
24, no. 4, September 1981, pages 2042-2043,
New York, US; L.R. BAHL et al.: "Automatic
selection of speech prototypes"**

(73) Proprietor: **International Business Machines
Corporation
Old Orchard Road
Armonk, N.Y. 10504(US)**

(72) Inventor: **Kuroda, Akihiro
501 goh Sunpales 39-2 1-chome, Sangenjaya
Setagaya-ku Tokyo-to(JP)**
Inventor: **Nishimura, Masafumi
405 Denendomiru 3-29-2 Shinishikawa
Midori-ku
Yokohama-shi Kanagawa-ken(JP)**
Inventor: **Sugawara, Kazuhide
1-39-11-307 Heiwadai Nerima-ku
Tokyo-to(JP)**

(74) Representative: **Atchley, Martin John Waldeg-
rave
IBM United Kingdom Limited Intellectual
Property Department Hursley Park
Winchester Hampshire SO21 2JN(GB)**

EP 0 243 009 B1

## Description

The present invention relates to a speech recognition system using Markov models.

In a speech recognition system using Markov models, speech is recognised from a probabilistic view point. In one such system, for example, a Markov model is established for each word.

A Markov model is a finite state device having a plurality of states and the ability to undergo transitions between the states. For each transition, the probability of occurrence is defined and each transition produces an output of a string of labels or symbols. Unknown speech to be recognised is converted into a label string, and thereafter the probability of each word Markov model producing the label string as an output is determined based on the transition occurrence probabilities and the label output produced, which are hereafter referred to as parameters, and then the word Markov model having the highest probability of producing the label string is determined. The speech recognition is performed according to this result. In a speech recognition system using Markov models, the parameters can be estimated statistically so that a recognition score is improved.

The details of the above speech recognition technique are described in the following articles.

(1) "A Maximum Likelihood Approach to Continuous Speech Recognition" (IEEE Transactions on Pattern Analysis and Machine Intelligence, PAMI-Vol.5, No.2, pp. 179-190, 1983, Lalit R.Bahl, Frederick Jelinek and Robert L. Mercer)

(2) "Continuous Speech Recognition by Statistical Methods" (Proceedings of the IEEE vol. 64, 1976, pp. 532-556, Frederick Jelinek)

(3) "An Introduction to the Application of the Theory of Probabilistic Functions of a Markov Process to Automatic Speech Recognition" (The Bell System Technical Journal vol. 64, No. 4, 1983, April, S. E. Levinson, L. R. Rabiner and M. M. Sondhi).

A speech recognition system using Markov models, however, needs a tremendous amount of speech data and the training thereof requires much time. Furthermore a speech recognition system trained to recognise the speech from a particular speaker often is not able to recognise satisfactorily the speech from other speakers. Even with the same speaker, when there is a long time between the training of the system and the use of the system or the recognition of speech from that speaker, only a poor standard of recognition can be achieved.

The object of the present invention to provide an improved speech recognition system.

The present invention relates to a speech recognition system of the type comprising a plurality of probabilistic finite state models each having a number of states and the ability of undergoing transitions from one state to another and producing a corresponding output representing a speech element, means for defining for each model probability parameters each representing the probability that the model will undergo a transition from one predetermined state to another predetermined state and produce a corresponding output and training means for supplying training speech data to the models in order to train the models and to define initial values for the probability parameters for each of the models.

Such a system can be used to recognize input speech data by initially dividing the input speech data into individual speech elements and then applying the input speech elements to the models, and utilising the probability parameters of the models to recognise the input speech elements.

According to the invention the speech recognition system is characterised in that it comprises adaptation means for supplying, after training has been completed, adaptation speech data to the models in order to adapt the models and to define adapted values of the probability parameters for each of the models. The adapted values are derived, when the adaptation speech data relates to the same speech data as the training speech data, by interpolation between the initial values and values derived from the adaptation speech data and, when the adaptation speech data relates to different speech data to the training speech data, by interpolation between the initial values and a constant followed by the first interpolation, and means for utilizing the adapted values of the probability parameters to recognise said input speech elements.

The adapted values of the probability parameters are used to recognize the input speech elements.

According to the invention, a speech recognition method is as claimed in claim 4.

In order that the invention may be more readily understood an embodiment will now be described with reference to the accompanying drawings, in which:

Fig. 1 is a block diagram illustrating a speech recognition system in accordance with the invention,

Fig. 2 is a diagram for describing the recognition system illustrated in Figure 1,

Fig. 3 is a flow chart describing the operation of one component of the recognition system illustrated in Figure 1,

Fig. 4 is a flow chart describing the operation of another component of the recognition system illustrated in Figure 1,

Fig. 5, Fig. 6 and Fig. 7 are diagrams relating to the operation of the component illustrated in Figure 4,

Fig. 8 is a flow chart describing the operation of yet another component of the recognition system illustrated in Figure 1, and

Fig. 9 is a flow chart describing the operation of a modified form of the recognition system illustrated in Figure 1.

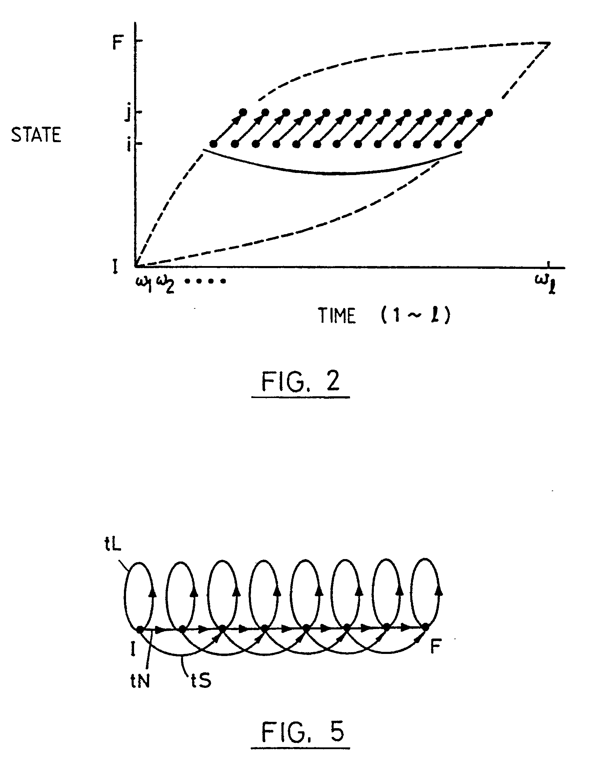

Fig. 2 illustrates the operation of a speech recognition system which includes a Markov model. In Fig. 2, the transverse axis represents the passage of time and the ordinate axis indicates different states of the Markov model. An input label string representing speech to be recognised is shown as $w_1$, $w_2$ .... $w_1$ along the time axis. The state of the Markov model, as time passes, undergoes transitions from an initial state I to a final state F. The broken line represents the envelope of all the possible transition paths. The probability of undergoing a transition from the i-th state to the j-th state and at the same time producing an output label k is $C^*(i,j,k)$. In other words, the probability of passing along the transition paths indicated by the arrows in Fig. 2 and producing an output label k is determined from the parameters $p(i,j,k)$.

Here $p(i,j,k)$ is defined as the probability of undergoing a transition from state i to state j and producing an output k. The probability of the Markov model being in the state i, $S^*(i)$, as shown by the arc, is obtained by summing $C^*(i,j,k)$ for each j and each k. From the definition of the probabilities $C^*(i,j,k)$ and $S^*(i)$, new parameters $P'(i,j,k)$ can be obtained according to the following estimation equation.

$$P'(i,j,k) = C^*(i,j,k)/S^*(i)$$

Repeating the above estimation can result in the parameters $P_0(i,j,k)$ accurately reflecting the training data. Here the suffix Zero indicates that the value is after training. Therefore $S_0^*$ and $C_0^*$ are the values after training.

In a speech recognition system according to the invention, during adaptation of the system, the probabilities $C_1^*(i,j,k)$ and $S_1^*(i)$ are obtained using parameter $P_0(i,j,k)$. Then the new parameter after adaptation, $P_1(i,j,k)$, is determined as follows.

$$P_1(i,j,k) = \{\lambda\, C_0^*(i,j,k) + (1-\lambda)\, C_1^*(i,j,k)\} / \{\lambda S_0^*(i) + (1-\lambda)S_1^*\}$$

wherein $0 <= \lambda <= 1$

This means that the probabilities needed for estimation are determined by interpolation. This interpolation can be used to adapt the parameters $P_0(i,j,k)$ obtained by the initial training operation, for different recognition circumstances.

Based on the equation of $C_0^*(i,j,k) = P_0(i,j,k) x S_0^*(i)$, the following estimation can be made.

$$P1(i,j,k) = \{\lambda P_0(i,j,k) \cdot S_0^*(i) + (1-\lambda)C_1^*(i,j,k)\}/\{\lambda S_0^*(i) + (1-\lambda)S_1^*(i)\}$$

In this case the probability $C_0^*(i,j,k)$ does not need to be stored.

When input speech data used for initial training is quite different from input speech data used for adaptation, it is desirable to make use of the following, instead of $P_0(i,j,k)$.

$$(1-\mu)P_0(i,j,k) + \mu e$$

where $0 <= \mu <= 1$ and e is a certain small constant number which may be equal to 1/(the number of the labels)x(the number of the branches).

In a speech recognition system now to be described, the probabilities of the occurrence of the transition from one state to another state and producing an output label are used as probabilistic parameters of Markov models, although transition occurrence probabilities and output label output probabilities may be defined separately and used as parameters.

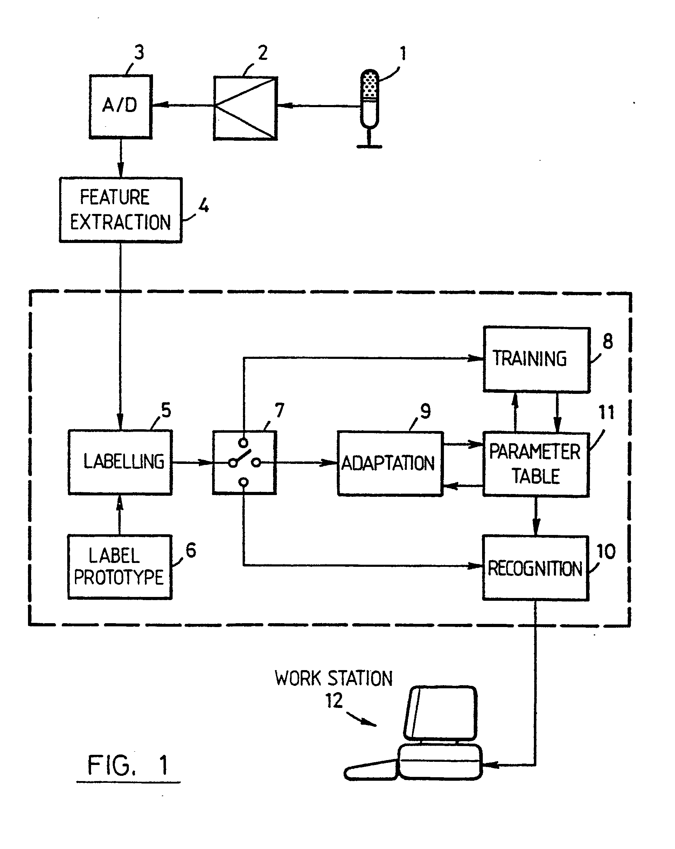

Fig.1 illustrates a s speech recognition system in accordance with the invention as a whole. Input speech data is supplied to an analog/digital (A/D) converter 3 through a microphone 1 and an amplifier 2 to be converted into digital data, which is then supplied to a feature extracting block 4. The feature extracting block 4 can be a array processor of the type sold by Floating Point Systems Inc. In the feature extracting block 4, the digitised input speech data is initially Fourier transformed every ten milli seconds using a twenty milli second wide window. The speech data is then produced as a output in each channel of a 20 channel band pass filter and is subsequently provided to the next stage, labelling block 5. This block 5 performs a labelling operation by referring to a label prototype dictionary 6, whose prototypes have been

3

produced by clustering. The number of them is 128.

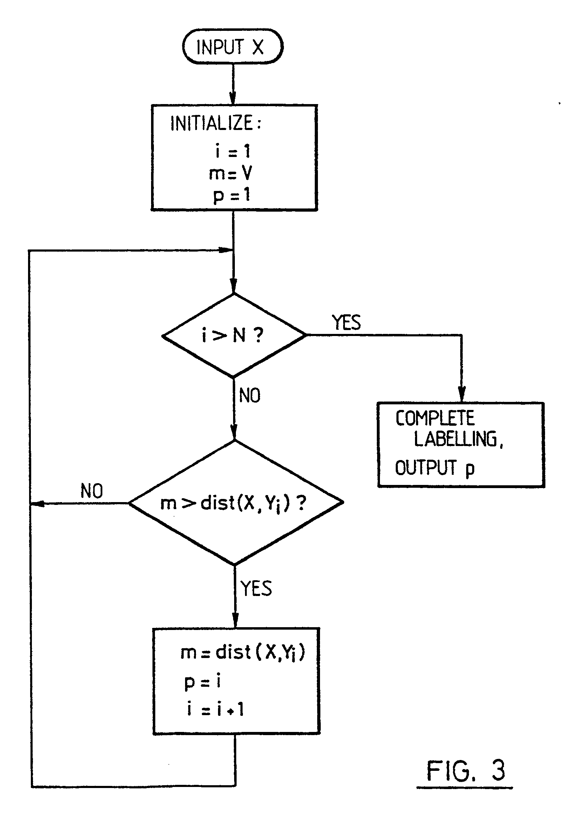

The labelling operation is for example performed as illustrated in the flow diagram of Fig.3, in which X is an input speech feature, $Y_i$ is the feature of the i-th prototype, N is the total number of prototypes ( = 128), dist(X, $Y_i$) is the Euclid distance between X and $Y_i$, and m is the minimum value among previous distances (X,$Y_i$). m is initialised to a very large number.

As shown in the flow diagram, each input feature X is in turn compared with the feature of each prototype, and for each input feature the most similar prototype, that is, the prototype having the shortest distance (X,$Y_i$) is produced as an output label or label number P.

As described above, the labelling block 5 produces an output label string with time period of ten milli seconds. between consecutive labels.

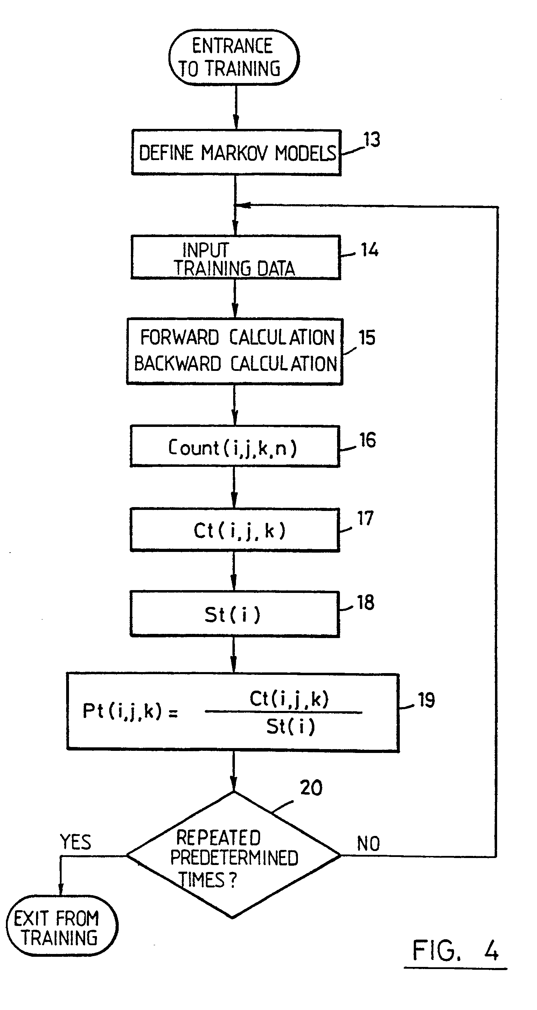

The label string from the labelling block 5 is provided either to a training block 8, or to an adaptation block 9, or to a recognition block 10, through the operation of a switching block 7. The detailed description of the operation of the training block 8 and the adaptation block 9 will be given later referring to Fig.4 and the following Figures. During initial training, the switching block 7 is switched to the training block 8 to supply the label string thereto. The training block 8 determines the parameter values of a parameter table 11 by training Markov models using the label string. During adaptation, the switching block 7 is switched to the adaptation block 9, which adapts the parameter values of the parameter table 11 based on the label string. During recognition, the switching block 7 is switched to the recognition block 10, which recognises input speech data based on the label string and the parameter table 11. The recognition block 10 can be designed according to Forward calculation or Viterbi algorithms which are described in detail in the above-mentioned article (2). The output from the recognition block 10 is supplied to a workstation 12 and is, for example, displayed on its monitor screen.

In Fig.1 the blocks surrounded by the broken line can be implemented in software on a host computer. An IBM 3083 processor can be used as the host computer, and CMS and PL/1 are used as an operation system and a programming language respectively. The above blocks can alternatively be implemented in hardware.

The operation of the training block 8 will now be described in detail.

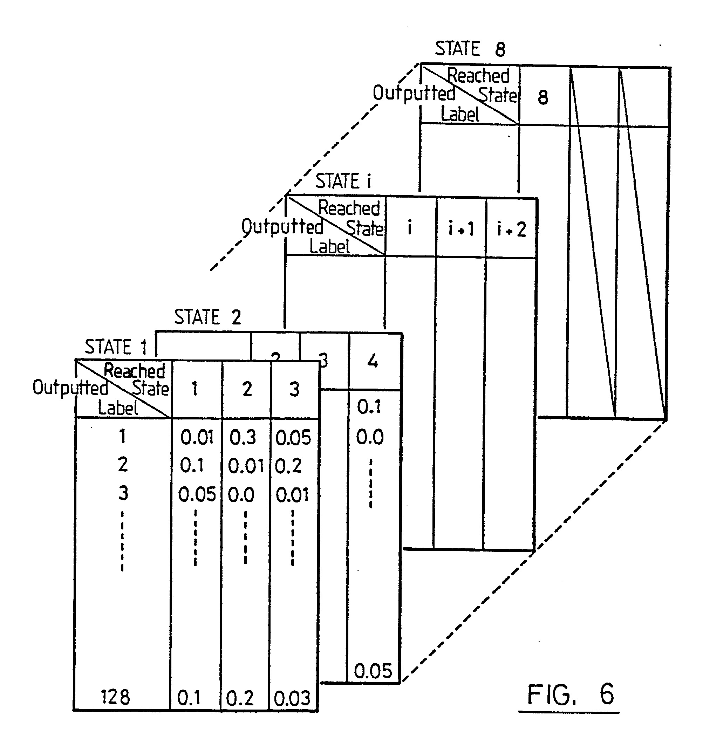

In Fig. 4, showing the procedure of the initial training, each word Markov model is first defined, step 13. In the embodiment being described the number of words is 200. A word Markov model is such as shown in Fig.5. In this figure small solid circles indicate states, and arrows show transitions. The number of probable states, including the initial state I and the final state F, is 8. There are three types of transition, that is, transitions to the next state tN, transitions skipping one state tS, and transitions looping the same state tL. The number of the labels assigned to one word is about 40 to 50, and the label string of the word is matched from the initial state to the final state, looping sometimes and skipping sometimes.

To define the Markov models means to establish the parameter table 11 of Fig. 1 tentatively. In particular, for each word a table format as shown in Fig.6 is assigned and the parameters P(i,j,k) are initialised. The parameter P(i,j,k) means the probability that a transition from the state i to the state j occurs in a Markov model, outputting a label k. Furthermore, in the initialisation process, the parameters are set so that a transition to the next state, a looping transition and a skipping transition occur at probabilities of 0.9, 0.05 and 0.05 respectively, and so that on each transition all labels are produced at an equal probability, that is 1/128.

After defining word Markov models, initial training speech data is inputted, step 14 (Fig. 4), which data has been obtained by speaking 200 words to be recognised five times each. Five utterances of a word have been put together and each utterance has been prepared to show which word it responds to, and in which order it was spoken. Here let $U = (u_1, u_2, \cdots, u_5)$ to indicate a set of utterances of one specific word and let $u_n = w_{n1}, w_{n2}, \ldots, w_{n1n}$ to indicate each utterance $u_n$. $w_{n1}\ldots$ indicate here observed labels.

After completing the input of the initial training speech data, then Forward calculation and Backward calculation are performed, step 15 (Fig. 4). Though the following procedure is performed for each word, for convenience of description, consideration is only given to a set of utterances of one word. In Forward calculation and Backward calculation the following forward value f(i,x,n) and backward value b(i,x,n) are calculated.

f(i,x,n): the probability that the Markov model undergoes a transition forward to the state i at time x after starting from the initial state at time 0 for the label string $u_n$.

b(i,x,n): the probability that the Markov model undergoes a transition backwards to the state i at time x after starting from the final state at time $I_n$ for the label string $u_n$.

Forward calculation and Backward calculation are easily performed sequentially using the following equations.

4

## Forward Calculation

For $x = 0$,
$f(i,0,n) = 1$, if $i = 1$
$= 0$, otherwise
For $1 <= x <= l_n$,

$$f(i,x,n) = \sum_{k=0}^{2} \{f(i-k, x-1, n) \cdot P_{t-1}(i-k,i,w_{nx})\}$$

wherein $P_{t-1}$ is the parameter stored in the parameter table at that time, and k is determined depending on the Markov model, and in the embodiment being described $k = 0, 1,$ or 2.

## Backward Calculation

For $x = l_n$,
$b(i,x,n) = 1$ if $i = E$,
$= 0$, otherwise
For $0 <= x <= l_n$,

$$b(i, x, n) = \sum_{k=0}^{2} \{b(i+k, x+1, n) \cdot P_{t-1}(i, i+k, w_{nx+1})\}$$

wherein E is the number of the states of the Markov model (8 for the embodiment being described).

After completing the Forward and Backward calculations, the probability that the Markov model will undergo a transition from the state i to the state j outputting the label k for the label string $u_n$, count$(i,j,k,n)$ is then determined based on the forward value $f(i,x,n)$ and the backward value $b(i,k,n)$ for the label string $u_n$, step 16. Count$(i,j,k,n)$ is determined according to the following equations.

$$\text{count}(i,j,k,n)$$

$$= \sum_{x=1}^{ln} (\delta(w_{nx},k) \cdot f(i,x-1,n) \cdot b(j,x,n) \cdot P_{t-1}(i,j,w_{nx}))$$

wherein $\delta(w_{nx},k) = 1$, if $w_{nx} = k$
$= 0$ otherwise

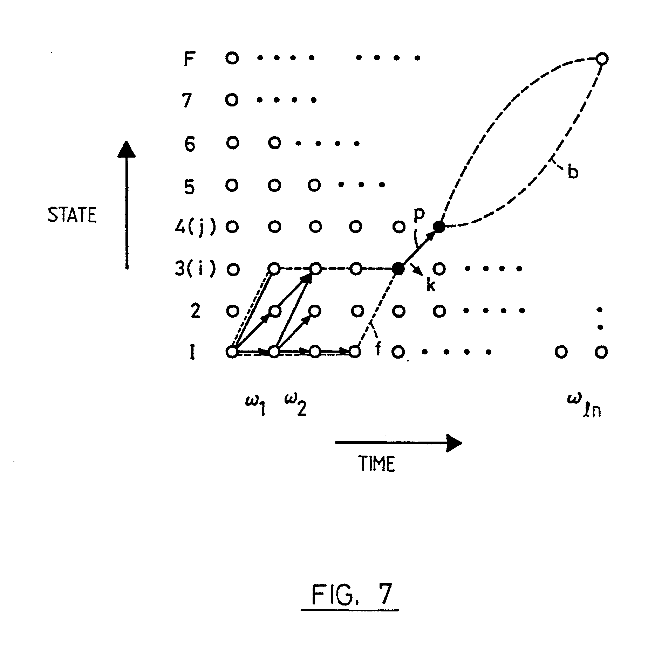

The above expression can be easily understood referring to Fig.7, which shows a graph for matching the Markov model of the embodiment being described against the label string $u_n (= w_{n1} w_{n2} ...w_{nln})$. $u_n(w_{nx})$ is also shown along the time axis. When $w_{nx} = k$, that is, $\delta(w_{nx},k) = 1$, the $w_{nx}$ is circled. Consider the path accompanied by an arrow and extending from the state i, state 3 in Fig.7 to the state j, state 4 in Fig.7 at the observing time x, at which the label $w_{nx}$ occurs. Both ends of the path are indicated by small solid circles in Fig.7. In this case the probability that the Markov model outputs $k = w_{nx}$ is $P_{t-1}(i,j,w_{nx})$. Furthermore, the probability that the Markov model undergoes a transition forward from the initial state I to the solid lattice point of the state i at time x-1 as shown by the broken line f is represented by the forward value $f(i,x-1,n)$, and on the other hand the probability that it undergoes a transition back from the final state F to the solid lattice point of the state j at time x as shown by the broken line b is represented by the backward value b-$(j,x,n)$. The probability that $k = w_{nx}$ is outputted on the path p is therefore as follows.

$f(i,x-1,n).b(j,x,n).P(i,j,w_{nx})$

Count$(i,j,k,n)$ is obtained by summing up the probabilities of the circled labels, which corresponds to the

5

operation of $\delta (w_{nx},k)$. The can be expressed as follows:

$$\text{Count}(i,j,k,n)$$

$$= \sum_{x=1}^{ln} (\delta(w_{nx},k) \cdot f(i,x-1,n) \cdot b(j,x,n) \cdot P_{t-1}(i,j,w_{nx}))$$

After obtaining Count(i,j,k,n) for each label string $u_n(n = 1$ to 5), the probability for a set of label strings, U, that is, the whole training speech data for a certain word,$C_t(i,j,k)$ is obtained, step 17. It should be noted that successive label strings $u_n$ are different from each other and that the probabilities for each of the label strings $u_n$, and the total probabilities of the label strings $T_n$ are all different from each other. Probability Count (i,j,k,n) should therefore be normalised by the total probability $T_n$. Here $T_n = f(E,l_n,n)$ and $E = 8$ in the embodiment being described.

The probability for the whole training speech data of the word to be recognised, $C_t(i,j,k)$ is determined as follows.

$$\sum_{n=1}^{5} \frac{1}{T_n} \, \text{count}(i, j, k, n)$$

Next, the probability that the Markov model is at the state i for the training speech data for the word to be recognised, $S_t(i)$ is determined Count(i,j,k,n), step 18.

$$S_t(i) = \sum_{n=1}^{5} \frac{1}{T_n} \, (\Sigma\Sigma_{jk} \, \text{count}(i, j, k, n))$$

Based on the probabilities $C_t(i,j,k)$ and $S_t(i)$, the next parameter $P_{t+1}(i,j,k)$ is estimated as follows,step 19.

$$P_t(i,j,k) = \frac{Ct(i,j,k)}{S_t(i)}$$

The above estimation process,or procedure of steps 14 through 19 is repeated a predetermined number of times, for example five times, step 20 to complete the training of the target words. In other words the same training operation is performed repeatedly.

After completing the training, the final parameter Po(i,j,k) is determined on the parameter table, Fig.1, to be used for the speech recognition that is followed. The probability which has been used for the last round of the estimation, $S_o(i)$, is also stored. This probability $S_o(i)$ is to be used for the adaptation, which will be hereinafter described.

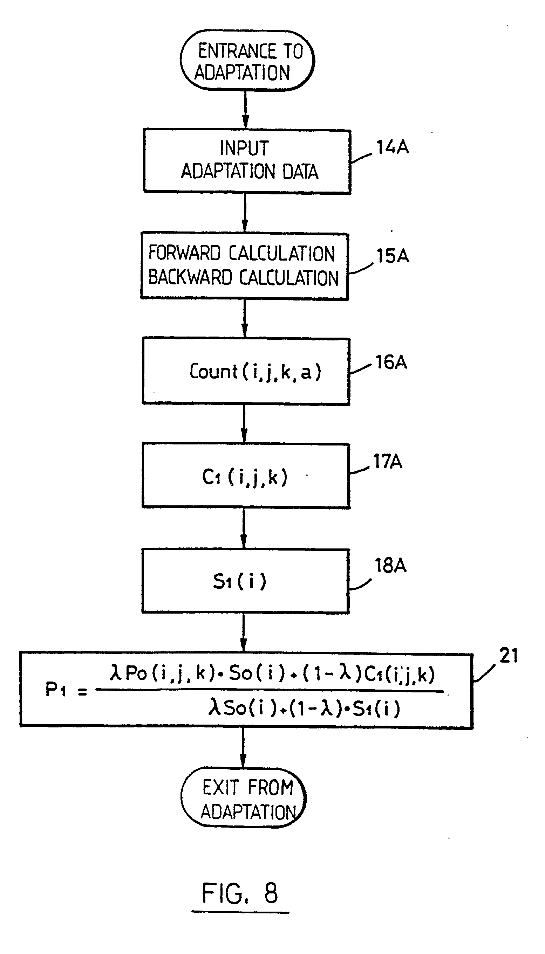

The operation of the adaptation block 9 will be next described referring to Fig.8. In Fig.8 parts having counterparts in Fig.4 are given the same reference numbers with suffix A, and a detailed description thereof will not be given.

In Fig. 8 adaptation speech data is inputted first, Step 14A, which data has been obtained by the speaker who is going to input his speech, uttering only once each word to be recognised. After this, the operations shown successively in the steps 15A through 18A are performed in the same way as in the case of the above mentioned training (Fig. 4). Then two probabilities which are to be used for estimation are obtained by interpolation. In the end the new parameter $P_1(i,j,k)$ is obtained as follows, Step 21.

$$P1(i,j,k) = \frac{\lambda C_0(i,j,k) + (1-\lambda)C_1(i,j,k)}{\lambda S_0(i) + (1-\lambda)S_1(i)}$$

wherein $0 <= \lambda <= 1$

In this example the adaptation process is performed only once, though this process may be performed more than once. Actually $C_o(i,j,k)$ is equal to $P_o(i,j,k) \cdot S_o(i)$, so the following expression is used for the estimation of $P1(i,j,k)$.

$$P1(i,j,k) = \frac{\lambda P_0(i,j,k) \cdot S_0(i) + (1-\lambda)C_1(i,j,k)}{\lambda S_0(i) + (1-\lambda)S_1(i)}$$

"a" of count $(i,j,k,a)$ in Fig. 8 shows that this probability is related to the label string for the adaptation data.

After performing those steps above mentioned, the adaptation is completed. From now on the speech of the speaker for whom the adaptation has been done is recognised with a high rate of success.

The speech recognition system being described can be adapted for different circumstances with small data and short training time.

Additionally optimisation of the system can be achieved by adjusting the interior division ratio, $\lambda$, according to the quality of the adaptation data such as reliability.

Assuming that the numbers of Markov models, branches, and labels are respectively X, Y, Z, then the amount of speech data increased by $S(i)$ is X. On the other hand the amount of speech data increased by $P_0(i,j,k)$ is XYZ. Therefore the amount of speech data increased by this adaptation is very small, as follows.

$$Z/XYZ = 1/YZ$$

The speech recognition system described also has an advantage that parts of software or hardware used can be used for both the adaptation process and the initial training process because these processes have many identical steps.

Futhermore the adaptation process can be performed again for example for the word wrongly recognised because the adaptation process can be performed for each word. Needless to say, an adaptation process for a word may not be performed until the word is wrongly recognised.

An alternative form of the above described speech recognition system will be next described. The adaptation process can be performed well using this alternative form when the quality of the adaptation speech data is quite different from that of the initial training speech data.

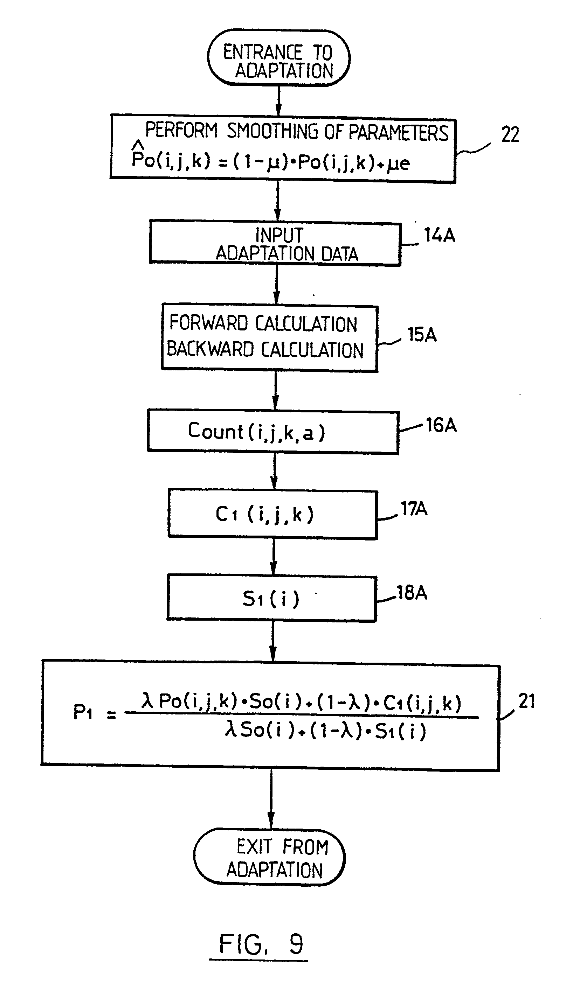

Fig. 9. shows the adaptation process of this alternative form of the system. In this figure parts having counterparts in Fig. 8 are given the same reference numbers, and a detailed description thereof will not be given.

In the alternative form of the system shown in Fig. 9. an interpolation process using $P_0(i,j,k)$ is performed as follows, step 22, before the new probabilities $C_1(i,j,k)$ and $S_1(i)$ are derived using the adaptation speech data.

$$P_o(i,j,k) = C(1-\mu)Po(i,j,k) + \mu e$$

This means that the value obtained by interpolating the parameter $P_o(i,j,k)$ and a small value e with the interior division ratio $\mu$ is utilised as the new parameter. In the training process during the adaptation process, how well parameters converge to actual values also depends heavily on initial values. Some paths which occurred rarely for initial training speech data may occur frequently for adaptation speech data. In this case adding a small number e to the parameter $P_0(i,j,k)$ provides a better convergence.

By utilising a speech recognition system as described above, the adaptation of the speech recognition system can be done with a small amount of speech data and in a short time. The required store capacity, the increase in the number of program steps and hardware components are respectively very small. Additionally, optimisation of the system can be achieved by adjusting the interior division ratio according to the quality of the adaptation speech data.

## Claims

1. A speech recognition system comprising

a plurality of probabilistic finite state models each having a number of states and the ability of undergoing transitions from one state to another and producing a corresponding output representing a speech element,

means for defining for each model probability parameters each representing the probability that said model will undergo a transition from one predetermined state to another predetermined state and produce a corresponding output,

training means (8) for supplying training speech data to said models in order to train said models and to define initial values ($P_0(i,j,k)$), for said probability parameters for each of said models,

means (4, 5, 6) for dividing input speech data into individual speech elements and for applying said input speech elements to said models, and

means for utilizing the probability parameters of said models to recognize said input speech elements,

characterised in that

said system comprises

adaptation means (9) for supplying, after training has been completed, adaptation speech data to said models in order to adapt said models and to define adapted values ($P_1(i,j,k)$) of said probability parameters for each of said models, said adapted values being derived, when said adaptation speech data relates to the same speech data as the training speech data, by interpolation between said initial values and values derived from said adaptation speech data and, when said adaptation speech data relates to different speech data to said training speech data, by interpolation between said initial values and a constant followed by said first interpolation, and

means (10) for utilising said adapted values of said probability parameters to recognize said input speech elements.

2. A speech recognition system as claimed in claim 1 characterised in that said training speech data comprises a plurality of speech elements closely related to said input speech elements and each repeated a plurality of times.

3. A speech recognition system as claimed in either of the preceding claims characterised in that said adaptation speech data comprises a plurality of speech elements closely related to said input speech elements and each occurring only once.

4. A speech recognition method comprising

defining, for a plurality of probabilistic finite state models each having a number of states and the ability of undergoing transitions from one state to another and producing a corresponding output representing a speech element, probability parameters each representing the probability that said model will undergo a transition from one predetermined state to another predetermined state and produce a corresponding output,

supplying training speech data to said models in order to train said models and to define initial values ($P_0(i,j,k)$) of said probability parameters for each of said models,

dividing input speech data into individual speech elements and applying said input speech elements to said models, and

utilising the probability parameters of said models to recognise said input speech elements,

EP 0 243 009 B1

characterised in that

said method comprises

supplying after training has been completed adaptation speech data to said models in order to adapt said models and to define adapted values ($P_1$ (i,j,k)) of said probability parameters for each of said models,

said adapted values being derived, when said adaptation speech data relates to the same speech data as the training speech data, by interpolation between said initial values and values derived from said adaptation speech data and, when said adaptation speech data relates to different speech data to said training speech data, by interpolation between said initial values and a constant followed by said first interpolation, and

utilising said adapted values of said probability parameters to recognise said input speech elements.

5. A speech recognition method as claimed in claim 4 characterised in that said training speech data supplied to said models comprises a plurality of speech elements closely related to said input speech elements and each repeated a plurality of times.

6. A speech recognition method as claimed in claims 4 or claim 5 characterised in that said adaptation speech data supplied to said models comprises a plurality of speech elements closely related to said input speech elements and each occurring only once.

**Revendications**

1. Système de reconnaissance de la parole comprenant

une pluralité de modèles à états finis probabilistes ayant chacun un nombre d'états et la possibilité d'effectuer des transitions d'un état à un autre et de produire une sortie correspondante représentant un élément de parole,

des moyens de définition, pour chaque modèle, de paramètres de probabilité représentant chacun la probabilité que ledit modèle effectue une transition d'un état prédéterminé à un autre état prédéterminé et produise une sortie correspondante,

des moyens d'apprentissage (8) pour fournir des données de parole d'apprentissage auxdits modèles afin d'entraîner lesdits modèles et de définir des valeurs initiales (P (i,j,k)), pour lesdits paramètres de probabilité pour chacun desdits modèles,

des moyens (4,5,6) de division des données de parole d'entrée en éléments de parole individuels, et d'application desdits éléments de parole d'entrée auxdits modèles, et

des moyens d'utilisation des paramètres de probabilité desdits modèles pour reconnaître lesdits éléments de parole d'entrée,

caractérisé en ce que ledit système comprend

des moyens d'adaptation (9) pour fournir, après achèvement de l'apprentissage, des données de parole d'adaptation auxdits modèles afin d'adapter lesdits modèles et de défini des valeurs adaptées (P (i,j,k)) desdits paramètres de probabilité pour chacun desdits modèles, lesdites valeurs adaptées étant obtenues, lorsque les dites données de parole d'adaptation concernent les mêmes données de parole que les données de parole d'apprentissage, par interpolation entre lesdites valeurs initiales et des valeurs dérivées desdites données de parole d'adaptation et, lorsque lesdites données de parole d'adaptation concernent des données de parole différentes des dites données de parole d'apprentissage, par interpolation entre lesdites valeurs initiales et une constante suivie par ladite première interpolation, et

des moyens (10) d'utilisation desdites valeurs adaptées desdits paramètres de probabilité pour reconnaître lesdits éléments de parole d'entrée.

2. Système de reconnaissance de la parole suivant la revendication 1, caractérisé en ce que lesdites données de parole d'apprentissage comprennent une pluralité d'éléments de parole étroitement liés auxdits éléments de parole d'entrée et répétés chacun une pluralité de fois.

3. Système de reconnaissance de la parole suivant l'une quelconque des revendications précédentes, caractérisé en ce que lesdites données de parole d'adaptation comprennent une pluralité d'éléments de

9

EP 0 243 009 B1

parole étroitement liés auxdits éléments de parole d'entrée et se produisant chacun seulement une fois.

4. Méthode de reconnaissance de la parole comprenant

la définition,pour une pluralité de modèles à états finis probabilistes ayant chacun un nombre d'états et la possibilité d'effectuer des transitions d'un état à un autre et de produire une sortie correspondante représentant un élément de parole, de paramètres de probabilité représentant chacun la probabilité que ledit modèle effectue une transition d'un état prédéterminé à un autre état prédéterminé et produise une sortie correspondante,

la fourniture de données de parole d'apprentissage auxdits modèles afin d'entraîner lesdits modèles et de définir des valeurs initiales ($P_0(i,j,k)$) desdits paramètres de probabilité pour chacun desdits modèles,

la division des données de parole d'entrée en éléments de parole individuels et l'application desdits éléments de parole d'entrée auxdits modèles, et

l'utilisation des paramètres de probabilité desdits modèles pour reconnaître lesdits éléments de parole d'entrée,

caractérisée en ce que ladite méthode comprend

la fourniture, après achèvement de l'apprentissage, de données de parole d'adaptation auxdits modèles afin d'adapter lesdits modèles et de définir des valeurs adaptées ($P_1(i,j,k)$) desdits paramètres de probabilité pour chacun desdits modèles,

lesdites valeurs adaptées étant dérivées, lorsque lesdites données de parole d'adaptation concernent les mêmes données de parole que les données de parole d'apprentissage, par interpolation entre lesdites valeurs initiales et des valeurs dérivées desdites données de parole d'adaptation et, lorsque lesdites données de parole d'adaptation concernent des données de parole différentes des dites données de parole d'apprentissage, par interpolation entre lesdites valeurs initiales et une constante suivie par ladite première interpolation, et

l'utilisation desdites valeurs adaptées desdits paramètres de probabilité pour reconnaître lesdits éléments de parole d'entrée.

5. Méthode de reconnaissance de la parole suivant la revendication 4, caractérisée en ce que lesdites données de parole d'apprentissage fournies auxdits modèles comprennent une pluralité d'éléments de parole étroitement liés auxdits éléments de parole d'entrée et répétés chacun une pluralité de fois.

6. Méthode de reconnaissance de la parole suivant la revendication 4 ou la revendication 5, caractérisée en ce que lesdites données de parole d'adaptation fournies auxdits modèles comprennent une pluralité d'éléments de parole étroitement associés auxdits éléments de parole d'entrée et apparaissant chacun une seule fois.

**Patentansprüche**

1. System zur Spracherkennung, das folgendes aufweist:

eine Mehrzahl probabilistischer, endlicher Modelle, wobei jedes eine Anzahl von Zuständen aufweist und Übergänge von einem Zustand in einen anderen erfahren und einen entsprechenden, ein Sprachelement repräsentierenden Ausgang erzeugen kann,

Mittel zum Definieren von Wahrscheinlichkeitsparametern für jedes Modell, wobei jeder die Wahrscheinlichkeit repräsentiert, daß das Modell einen Übergang von einem vorbestimmten Zustand in einen anderen vorbestimmten Zustand erfahren und einen entsprechenden Ausgang erzeugen wird,

Übungsmittel (8) zum Liefern von Übungssprachdaten an die Modelle, um die Modelle üben zu lassen und um Anfangswerte ($P_o(i,j,k)$) für die Wahrscheinlichkeitsparameter für jedes der Modelle zu definieren,

Mittel (4, 5, 6) zum Teilen von Eingangssprachdaten in einzelne Sprachelemente und zum Verwenden der Eingangssprachelemente bei den Modellen und

Mittel zum Verwenden der Wahrscheinlichkeitsparameter der Modelle, um die Eingangssprachelemente zu erkennen,

dadurch gekennzeichnet, daß

das System aufweist:

Adaptierungsmittel (9) zum Liefern von Adaptierungssprachdaten an die Modelle, nachdem das Üben abgeschlossen wurde, um die Modelle zu adaptieren und um adaptierte Werte $(P_1(i,j,k))$ der Wahrscheinlichkeitsparameter für jedes der Modelle zu definieren, wobei die adaptierten Werte durch eine Interpolation zwischen den Anfangswerten und von den Adaptierungssprachdaten abgeleiteten Werten abgeleitet sind, wenn sich die Adaptierungssprachdaten auf dieselben Sprachdaten wie die Übungssprachdaten beziehen, und durch eine Interpolation zwischen den Anfangswerten und einer von der ersten Interpolation gefolgten Konstante, wenn sich die Adaptierungssprachdaten auf von den Übungssprachdaten verschiedene Sprachdaten beziehen und

Mittel (10) zum Verwenden der adaptierten Werte der Wahrscheinlichkeitsparameter zum Erkennen der Eingangssprachelemente.

2. System zur Spracherkennung nach Anspruch 1, dadurch gekennzeichnet, daß die Übungssprachdaten eine Mehrzahl von Sprachelementen aufweisen, die zu den Eingangssprachelementen in enger Beziehung stehen und bei welchem jedes mehrere Male wiederholt wird.

3. System zur Spracherkennung nach einer der vorgehenden Ansprüche, dadurch gekennzeichnet, daß die Adaptierungssprachdaten eine Mehrzahl von Sprachelementen aufweisen, die zu den Eingangssprachelementen in enger Beziehung stehen und bei welchen jedes nur einmal auftritt.

4. Verfahren zur Spracherkennung, das umfaßt:

Definieren von Wahrscheinlichkeitsparametern, bei welchen jeder die Wahrscheinlichkeit repräsentiert, daß das Modell einen Übergang von einem vorbestimmten Zustand in einen anderen vorbestimmten Zustand erfahren und einen entsprechenden Ausgang erzeugen wird, für eine Mehrzahl probabilistischer endlicher Modelle, bei welchen jedes eine Anzahl von Zuständen aufweist und Übergänge von einem Zustand in einen anderen erfahren und einen entsprechenden, ein Sprachelement repräsentierenden Ausgang erzeugen kann,

Liefern von Übungssprachdaten an die Modelle, um die Modelle üben zu lassen und um Anfangswerte $(P_0(i,j,k))$ der Wahrscheinlichkeitsparameter für jedes der Modelle zu definieren,

Teilen der Eingangssprachdaten in einzelne Sprachelemente und Verwenden der Eingangssprachelemente bei den Modellen und

Verwenden der Wahrscheinlichkeitsparameter der Modelle zum Erkennen der Eingangssprachelemente,

dadurch gekennzeichnet, daß

das Verfahren umfaßt:

Liefern von Adaptierungssprachdaten an die Modelle, nachdem das Üben abgeschlossen wurde, um die Modelle zu adaptieren und um adaptierte Werte $(P_1(i,j,k))$ der Wahrscheinlichkeitsparameter für jedes der Modelle zu definieren

wobei die adaptierten Werte durch eine Interpolation zwischen den Anfangswerten und von den Adaptierungssprachdaten abgeleiteten Werten abgeleitet sind, wenn sich die Adaptierungssprachdaten auf dieselben Sprachdaten wie die Übungssprachdaten beziehen, und durch eine Interpolation zwischen den Anfangswerten und einer von der ersten Interpolation gefolgten Konstante, wenn sich die Adaptierungssprachdaten auf von den Übungssprachdaten verschiedene Sprachdaten beziehen und

Verwenden der adaptierten Werte der Wahrscheinlichkeitsparameter zum Erkennen der Eingangssprachelemente.

5. Verfahren zur Spracherkennung nach Anspruch 4, dadurch gekennzeichnet, daß die an die Modelle gelieferten Übungssprachdaten eine Mehrzahl von Sprachelementen aufweisen, die zu den Eingangssprachelementen in enger Beziehung stehen und bei welchem jedes mehrere Male wiederholt wird.

6. Verfahren zur Spracherkennung nach Anspruch 4 oder 5, dadurch gekennzeichnet, daß die an die Modelle gelieferten Adaptierungssprachdaten eine Mehrzahl von Sprachelementen auf-weisen, die zu den Eingangssprachelementen in enger Beziehung stehen und bei welchen jedes nur einmal auftritt.

FIG. 1

FIG. 2

FIG. 5

FIG. 3

ENTRANCE TO TRAINING

DEFINE MARKOV MODELS — 13

INPUT TRAINING DATA — 14

FORWARD CALCULATION
BACKWARD CALCULATION — 15

Count ( i, j, k, n ) — 16

Ct ( i, j, k ) — 17

St ( i ) — 18

$$Pt(i,j,k) = \frac{Ct(i,j,k)}{St(i)}$$ — 19

20

REPEATED PREDETERMINED TIMES ?

YES    NO

EXIT FROM TRAINING

FIG. 4

FIG. 6

FIG. 7

```
                    ENTRANCE TO
                    ADAPTATION

                         │
                         ▼

                  ┌──────────────────┐
                  │     INPUT        │─── 14A
                  │ ADAPTATION DATA  │
                  └──────────────────┘

                         │
                         ▼

                  ┌──────────────────┐
                  │ FORWARD CALCULATION │─── 15A
                  │ BACKWARD CALCULATION│
                  └──────────────────┘

                         │
                         ▼

                  ┌──────────────────┐
                  │  Count(i,j,k,a)  │─── 16A
                  └──────────────────┘

                         │
                         ▼

                  ┌──────────────────┐
                  │    C₁(i,j,k)     │─── 17A
                  └──────────────────┘

                         │
                         ▼

                  ┌──────────────────┐
                  │     S₁(i)        │─── 18A
                  └──────────────────┘

                         │
                         ▼
```

$$P_1 = \frac{\lambda P_0(i,j,k) \cdot S_0(i) + (1-\lambda) C_1(i,j,k)}{\lambda S_0(i) + (1-\lambda) \cdot S_1(i)}$$

— 21

```
                    EXIT FROM
                    ADAPTATION
```

## FIG. 8

ENTRANCE TO
ADAPTATION

PERFORM SMOOTHING OF PARAMETERS — 22
$\hat{P}_0(i,j,k) = (1-\mu)\cdot P_0(i,j,k) + \mu e$

INPUT
ADAPTATION DATA — 14A

FORWARD CALCULATION
BACKWARD CALCULATION — 15A

Count (i,j,k,a) — 16A

$C_1(i,j,k)$ — 17A

$S_1(i)$ — 18A

$$P_1 = \frac{\lambda P_0(i,j,k)\cdot S_0(i) + (1-\lambda)\cdot C_1(i,j,k)}{\lambda S_0(i) + (1-\lambda)\cdot S_1(i)}$$ — 21

EXIT FROM
ADAPTATION

FIG. 9